# EUROPEAN PATENT APPLICATION

(11) **EP 3 477 508 A1**
(43) Date of publication of application: **01.05.2019**
(21) Application number: 18187725.9
(22) Date of filing: 07.08.2018
(51) Int. Cl.: G06F 17/30, G06F 9/46

(54) **DATA STREAM PROCESSING METHOD AND SYSTEM FOR PROCESSING TRANSACTIONS IN A DATA STREAM**

(30) Priority: 26.10.2017 US 201715794419
(71) Applicant: Data Artisans GmbH, 10963 Berlin (DE)
(72) Inventor: EWEN, Stephan, 10435 Berlin (DE); KRETTEK, Aljoscha, 10827 Berlin (DE); RICHTER, Stefan, 12307 Berlin (DE); LUCAS, Patrick, 10115 Berlin (DE)
(74) Representative: Viering, Jentschura & Partner mbB Patent- und Rechtsanwälte

(57) **Abstract**

Various embodiments provide a data stream processing method. The method may include receiving by at least one first processor a data stream comprising first data that includes transactions to be executed on a database, receiving by at least one second processor from the at least one first processor information regarding data access to the database and second data indicative of a time-based order of the transactions, the information extracted from the first data and the second data, receiving by at least one third processor from the at least one first processor the first data, and processing the transactions by the at least one third processor, wherein the at least one second processor provides data access to the database to the at least one third processor based on the time-based order determined from the second data.

## Description

### Technical Field

Various embodiments relate generally to a method and a system for processing data streams.

### Background

In the field of processing data streams and systems for processing data streams (also called streaming dataflow systems), especially in the context of distributed systems, scaling and secure and consistent processing are main aspects. In terms of scaling, a method or a system should be able to handle an increasing quantity of data, number of data streams and number of distributed databases/computing devices within the system and should keep latency and power consumption low. In terms of secure and consistent processing, one or more data streams should be processed in a way to ensure that the process results are correct, e.g. that processing of one data stream does not interfere with the processing of another data stream.

### Summary

According to an embodiment, a data stream processing method includes receiving by at least one first processor a data stream including first data that includes transactions to be executed on a database and receiving by at least one second processor from the at least one first processor information regarding data access to the database and second data indicative of a time-based order of the transactions, the information extracted from the first data and the second data. The method further includes receiving, by at least one third processor from the at least one first processor the first data and processing the transactions by the at least one third processor. The at least one second processor provides data access to the database to the at least one third processor based on the time-based order determined from the second data.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a flow chart of a method for processing one or more data streams;
FIGS. 2A and 2B show systems for processing one or more data streams;
FIG. 3 shows another system for processing one or more data streams;
FIG. 4 shows another system for processing one or more data streams;
FIG. 5 shows another system for processing one or more data streams;
FIG. 6A shows a system for adding data indicative of a time-based order to a data stream;
FIG. 6B shows a data stream with added data indicative of a time-based order; and
FIG. 7 shows illustrates prohibiting data access.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The terms "processor" or "controller" as, for example, used herein may be understood as any kind of entity that allows handling data. The data may be handled according to one or more specific functions executed by the processor or controller. Further, a processor or controller as used herein may be understood as any kind of circuit, e.g., any kind of analog or digital circuit. The term "handle" or "handling" as for example used herein referring to data handling, file handling or request handling may be understood as any kind of operation, e.g., an I/O operation, or any kind of logic operation. An I/O operation may be, for example, storing (also referred to as writing) and reading.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term data, however, is not limited to the aforementioned examples and may take various forms and represent any information as understood in the art. The term "communicate (with)" as used herein may be understood as a transport (including sending and receiving) of data which may be a symmetric communication as well as an asymmetric communication, e.g. asymmetric in the communication direction, the data load, in a time-aspect and/or the communication may be unidirectional.

A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

Differences between software and hardware implemented data handling may blur. A processor, controller, and/or circuit detailed herein may be implemented in software, hardware and/or as hybrid implementation including software and hardware.

The term "system" (e.g., a storage system, a server system, client system, guest system etc.) detailed herein may be understood as a set of interacting elements, wherein the elements can be, by way of example and not of limitation, one or more mechanical components, one or more electrical components, one or more instructions (e.g., encoded in storage media), and/or one or more processors, and the like.

An aspect of various described embodiments and examples is to provide a data stream processing method and a system for data stream processing which manage scalability and serializiability of data access and modification, especially in distributed setups with several processors and/or computing machines. This is achieved by receiving a data stream including data indicative of a transaction with a database by at least a first processor. A transaction may include explicit or implicit orders for to access a database, e.g. write, read, create and/or delete one or more values in a database. The first processor sends data according to data access needs of the transaction to a second processor and data according to the logic/payload of the transaction to a third processor. The second processor handles data access to the database according to the transaction in regard of a time-base order and the third processor implements the logic of the transaction. The second processor and the third processor are working together to handle the transaction. The second processor and the third processor handle different parts of the processing.

Serializiability means isolation of a transaction with a database from other transactions with the database by ensuring that the processing and the resulting database state is as if all transactions were executed serially in some valid order. In this way, inconsistencies in the result due to interference of the transactions with each other are avoided.

Another aspect of various described embodiments and examples may be seen in implementing a cyclical data flow. A second processor provides data according to a transaction from a database and sends the corresponding values to the third processor. The third processor processes the logic of the transaction and after processing the logic the third processor sends updated values back to the second processor which updates the database with the updated values according to the processing of the third processor.

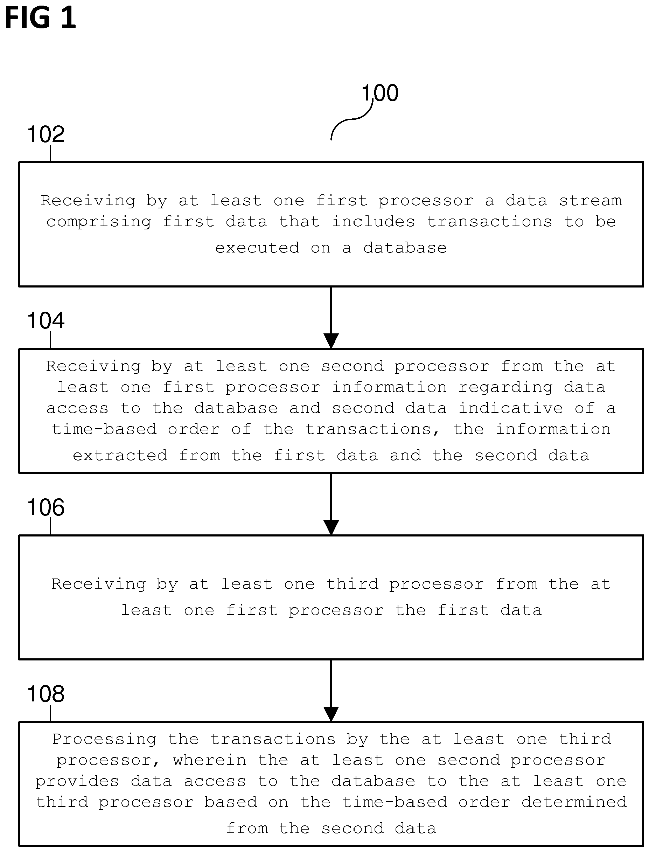

**FIG. 1** shows a flow chart of a method 100 for processing one or more data streams.

Any statements in the context of method 100, parts of the method 100 or involved components may be correspondingly applicable to any embodiments and examples of systems or methods as described above or in the following, e.g. for every example/embodiment described in the context of the following figures.

At 102, the method 100 includes receiving by at least one first processor a data stream including first data that includes transactions to be executed on a database.

A data stream may be understood as a continuous data flow, e.g. a data flow with no defined end. The data per time, e.g. the size of data packets within the stream, may vary. Furthermore, there may be time periods with no data or data not related to the method 100 in the data stream. The data in the data stream may include any form or format, e.g. according to a protocol.

A data stream, parts of a data stream or other data may be sent and received by technologies such as wireless and wired communication technology. The components in a method or a system may include corresponding means to receive, send and/or encode/decode the data.

An illustrative example may be a data stream from a continuously measuring sensor. The sensor sends data about one or more measured values/value changes with/in a data stream. By way of example, a temperature sensor may send data indicating a present temperature every time when a measured temperature increases or decreases by 1 °C. In a summer morning, when temperature comparatively rises quickly, the rate of data to be sent with the data stream is high. At noon, the temperature rises slower and the data/data rate to be sent with the data stream is comparatively lower. In the night, when temperature is stable for some time, no data may be sent for that time period.

A source of data for one or more data streams may be anything that produces at least for a time period a continuous flow of data. In some examples, a data source for a data stream may be any sensor in general, other devices such as computing devices, e.g. the internet or human activity. An illustrative example of continuous data generation for a data stream by human activity is data about monetary transactions, updates to the stock or inventory of a company or data from social media.

A processor may be understood as anything that processes data. A processor may be implemented in hardware, e.g. a processor may include one or more processors/sub-processors and may be implemented as a microcontroller, a CPU (central processing unit) and/or an ASIC (application-specific integrated circuit). A processor implemented in hardware may be accompanied with corresponding firmware and/or software. Also, a processor may be implemented in software, e.g. an instance of a computer program/algorithm running on suitable hardware may be understood as a processor. Two or more processors in form of software may use the same hardware, e.g. a computing device with one CPU as hardware may execute two computer programs at a time, e.g. each in a separate virtual machine. Both programs may be used as a processor. In a system or a method with several processors the type/implementations of processors may be the same for all processors or mixed.

A transaction/data indicative of a transaction may be generally understood as a change of the state a system. A transaction may include explicit or implicit orders for a system to access a database, e.g. write, read, create and/or delete one or more values in a database. In some examples, a transaction implicitly or explicitly may also include a logic/payload, e.g. an order on how to manipulate (e.g. under what conditions) the one or more values accessed. A transaction may be defined in the context of a processor configured to interpret the transaction. In other words, a processor may be configured to interpret the data in the data stream to generate a transaction to be understood by a system or components of that system.

A system or component implementing a database may have any kind of volatile or non-volatile memory to store the database. A database may include one or more stored values, e.g. one or more collections of values, e.g. a table. A collection of values may have one or more keys/key values which unambiguously identify the collection of data. A database may be implemented by one or more computing devices.

In an illustrative example, a database may be implemented by a distributed computing device at a bank which stores information of the account balances of several customers. The data stream may include data indicative of transactions of money between the individual accounts and/or sensor data. The data of the transaction is indicative at least of the data access (which account value has to be read and which account value has to be updated) and a certain amount of logic (how much money has to be transferred and under what conditions).

At 104, the method 100 includes receiving by at least one second processor from the at least one first processor information regarding data access to the database and second data indicative of a time-based order of the transactions, the information extracted from the first data and the second data.

The first data and the second data may take any form or may be implemented according to any protocol usable to communicate the data between the different processors, e.g. the data may be organized in packets according to a packet switched protocol such as TCP/IP. The information indicated in the data may organized in any form. E.g. illustratively described, the data may be explicit, such as transferring a bit value for the number "5", the data may be implicit, such as transferring data which is indicative for one or more processors, e.g. after a processing the data, that the number "5" is meant. The data may be organized according to any protocol, e.g. the data may be correspondingly encoded and/or encrypted. One or more processors are configured to encrypt/decrypt the data.

The first data and the second data may have the form and/or the protocol of the initial data stream. Also, a processor such as the first processor may copy, extract and/or interpret data from the data stream to generate the first data and/or the second data or to convert the first data and/or the second data to a format, e.g. according to a protocol, which other processors in a system may be configured to handle.

The first processor may extract the information regarding data access to the database from the first data. In various examples, the information is copied from the data stream and/or the information is drawn out of the data stream in the sense that the resulting data stream does or does not hold this information any more.

The second data indicative of a time-based order of the transactions may be added to the data stream by the first processor and/or the data in the data stream may already include data, e.g. also meta-data for example a sequence indicator, indicative of a time-based order as received by the first processor.

In general a time-based order or data indicative of a time-based order may comprise an actual time or a logical time (total or relative). In other examples, it may include data indicative of a sequence not related to a time and just indicating that one thing has to be processed after another. The implementation of a particular time-based order or data indicative of a time based order may be implemented according to the needs of a system or a method.

At 106, the method 100 includes receiving by at least one third processor from the at least one first processor the first data.

The third processor may be separately implemented from the second processor, e.g. the third processor may be another computing device, another computer program running within a computing device or another part of one computer program. However, they may also be implemented by one common computer or processor. As described later, it is not necessary that the data received by the third processor includes data, e.g. the second data, indicative of the time-based order of the transactions. In other words, the first data received by third processor may be free of the second data.

At 108, the method 100 includes processing the transactions by the at least one third processor. The at least one second processor provides data access to the database to the at least one third processor based on the time-based order determined from the second data.

By processing one or more transactions by splitting the processing between the second processor and the third processor, the third processor may but does not need to process data according to data access to the database (first data) and/or may but does not need to process data according to a time-based order of the data/transactions (second data) indicated in the data. The third processor may be configured to wait for processing a particular transaction until all necessary data is available. Data access to the database, managing and enforcing the time-based order and enforcing serializability may be implemented/managed by the second processor. Due to this "division of labor" between the second processor and the third processor, the system is more flexible, e.g. in terms of scalability if using more than one second processors. The third processor may be configured to implement a logic to process the data received from the first processor. The logic, e.g. an algorithm, may be already implemented in the third processor and/or the data received from the first processor may include data indicative of the logic (e.g. an indicated logic may be present in the data of the original data stream) and the third processor may be configured to implement the logic indicated within the data.

The method 100 or other corresponding methods and/or systems may have at least one of a first processor, at least one of a second processor and at least one of a third processor. The number of first, second and third processors may be adapted to the application of such a method or such a system. By way of example, there may be a number from 1 to 1000 first processors and/or a number from 1 to 1000 second processors and/or a number from 1 to 1000 third processors in a system or used in a method. If more than one first/second/third processor are used, the processors may be configured to each process a part of the total processing and/or may be configured to mimic at least partially the processing done by another processor to create a redundancy. In some examples, the method 100 may be implemented in such a way that each communication channels (e.g. between the different processors) is used unidirectional and/or asynchronously. This may imply that it is not necessary for the individual components such as the processors that waiting times for waiting on the receiving of data have to be implemented. By this, a high throughput of processes/transaction can be achieved, since each processor applies its (local) process without being blocked on any response or synchronous confirmation. E.g. in some examples, one or more of the above described processors may include corresponding buffers/memories/files to implement such a method, which may buffer (possibly in a persistent manner) multiple (possibly an unbounded number) of data items.

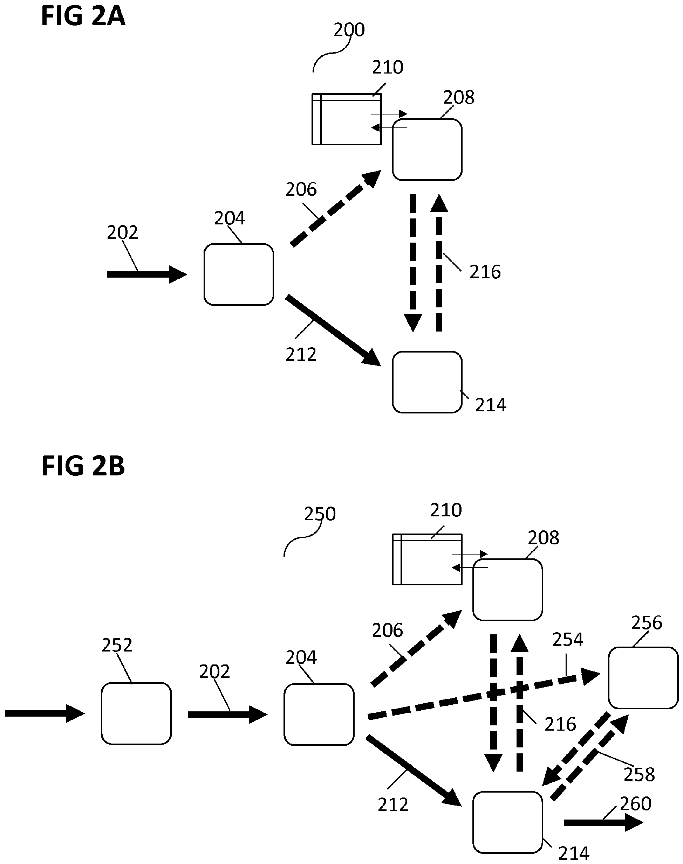

An illustrative example for a system which may be configured to implement the method 100 is given in the context of FIG.2A.

**FIG.2A** schematically shows a system 200 for processing one or more data streams 202.

One or more data streams 202 may be received by at least one first processor 204. The first processor 204 sends information 206 regarding data access to a database 210 and second data indicative of a time-based order of the transactions to at least one second processor 208. Furthermore, the first processor 204 may send first data indicative of transactions to be executed on the database to at least one third processor 214. The third processor 214 and the second processor 208 may be configured for exchanging data 216 to each other.

In the following the description of the system 200 will accompanied by an illustrative and non-exclusive example.

The data stream 202 may be received by the first processor 204. In the example, the system 200 is used for account managing. The data stream 202 includes data indicative of a transaction that moves 100$ from an account X to an account Y, if the balance of an account Z is positive. The data in the data stream 202 indicative of the transaction also includes data indicative of a time-based order of the transaction, e.g. a logical timestamp. The data indicative of the time-based order of the transaction may already be present in the data stream 202 as it is received by the first processor 204 or the first processor 204 may be configured to add the data indicative of the time-based order to the data in the data stream 202, e.g. add the data indicative of the time-based order directly to the data indicative of the transaction.

The second processor 208 receives information regarding data access to database 210 and data indicative of the time-based order from the first processor 204. In an example, the first processor 204 extracts or copies information regarding data access events (e.g. read, write, create and/or delete one or more values) of the transaction: Read value from account X, write value to account X, read value from account Y, write value to account Y and read value from account Z. These data access events of the transaction carry the same logical timestamp as the transaction. The order of the data access events to be processed may be indicated in the information regarding data access and/or the first data or may also be defined by the first processor 204 or the second processor 208.

In some examples, each data access event of a transaction is processed by one first processor, one second processor and one third processor. Which processor, e.g. which of more than one first/second/third processors, is used may be decided upon one or more values to be manipulated of a transaction.

The second processor 208 receives the data access events and reorders them according to the time-based order, e.g. the second processor 208 may receive data according to more than one transaction and/or by more than one data stream (or parts of a data stream) which may be targeted at one or more same values in the database 210. The second processor 208 may be configured to only process the transaction and its according data access events once it is sure that no events can come anymore that correspond to transactions/data events with a lower logical timestamp. In other words, the second processor 208 processes the transaction/the data access events when all data access events/all parts of the transaction are present at the second processor 208. A way to ensure that all data access events for a particular transaction are present at the second processor 208 may be implemented by a waiting time or by punctuation events as described later.

In the example, the database 210 is integrated with the second processor 208, e.g. in a computing device. In other examples, the database 210, e.g. a distributed database, is implemented in one or more other devices which are configured to communicate with the second processor 208 accordingly.

The second processor 208 may be configured to temporarily prohibit data access such as read access and/or write access to the database 210 for at least one value with respect to the first data and the second data, e.g. to one or more values in the database 210 concerned by the transaction. The second processor 208 may record a "hold", e.g. may set a flag and/or may generate data indicative of a "hold" such that at least temporarily other transactions and their respective data access events are prohibited to access the one or more values in the database 210. This way, serializability can be implemented to ensure safe data processing. Since data access to other transactions is temporarily prohibited, it is ensured that in the middle of processing of the transaction no other transaction may change the values in the database 210 and may corrupt the total processing. In other words, by temporarily prohibiting data access, e.g. by recording a hold, a time period is defined. Only data access to one or more values according one particular transaction is allowed to be processed. The second processor 208 may be configured to queue "holds" for more than one data access events for a value according to more than one transactions. This way of processing by the second processor in a time-based order may prevent a (distributed) deadlock. A deadlock may arise if a first process has a request for a resource which is held by a second process and the second process is held since it needs a resource held by the first process so that both processes can't be executed.

This may be only restricted to the values in the database 210 according to data access events of a particular transaction, e.g. two transactions with data access events to different values in the database 210 may be processed at the same time or not according to a time-based order. Due to temporarily prohibiting data access, the second processor 208 may have to wait, e.g. data access events are queued, to process the transaction/data access events according to the transaction if another transaction/data access events marked a necessary value for the transaction with a "hold".

The third processor 214 receives from the first processor 204 at least the first data that includes information about data access of the transaction. The third processor 214 may be configured to manage and process the logic (or payload) of the transaction and is supplied with data for the transaction by the second processor 208.

The third processor 214 may be informed by the first data what values are needed to process the transaction and it may be configured to wait for processing the transaction until all necessary values from the second processor 208 are provided or all necessary values are marked with a "hold". The third processor 214 may buffer/queue one or more transactions for which not all necessary values are available/provided at a time. In the example, when the third processor 214 receives all necessary data from the second processor 208, in this case the balance of account X (and in some cases the balance of account Y, e.g. to check if the account exists or is not put on hold by any means) and the balance of account Z, it processes the transaction logic/payload by checking if account X has enough money for transferring 100$ and checking if the balance of account Z is positive. If both checks have a positive outcome, write orders/updates are issued for account X and account Y to be sent to the second processor 208.

The second processor 208, which may have marked the accounts X and Y with a "hold" as long as this transaction is processed updates the accounts X and Y according to the updates/orders provided from the third processor 214. After updating the values, the second processor 208 releases the "hold". The processing of the transaction is finished and the accounts X and Y may be used for other transactions.

Unlike other data stream processing methods which are done in a linear fashion, where every node/operator/processor is visited once by a data stream, in this system and method, processing is done by the second processor 208 (data access) then by the third processor 214 (logic of the transaction) and then again by the second processor 208 (data access). In other words, such a system/method implements a cyclical data flow.

The second processor 208 handles the time-based order of one or more transactions/data access events. The third processor may, e.g. for checking the processing done by the second processor 208, but does not need to handle the time-based order. In other words, processing a transaction is divided between the second processor 208 and the third processor 210.

FIG.2B shows several optional additions made to the system 200.

**FIG.2B** shows the system 250 which includes the components and functionalities of the system 200. A fourth processor 252 and a further second processor 256 are added to the system 200. The fourth processor 252 and the further second processor 256 may be added independently to the system 200.

The fourth processor 252 may be configured to add data indicative of the time-based order to the data stream, e.g. directly to the data indicative of one or more transactions in the data stream. After adding the data indicative of the time-based order, the data stream may correspond to the data stream 202 of system 200.

The further second processor 256 may be configured to function as or similar to the second processor 208. It also may be configured to have or to communicate with a database (not shown). The third processor 214 may be provided with data access by both second processors 208 and 256, e.g. each second processor 208 and 256 may be configured to handle transactions/data access events according to the values stored at each second processor 208 and 256 or rather their respective databases. By including more than one second processor, the system may be scaled up for an increased amount of data in the data stream.

Also the third processor 214 may be configured to output data, e.g. in a data stream 260. This may be data indicative of a result of transactions, serve as a log or be other data. The third processor 214 may be queried about the state of the system 250, e.g. state of one or more databases, state of one or more values in the databases, amount and result of transactions/data access events or other data and may be configured to output the results by the data stream 260. By way of example, the data stream 260 may be received by one or more further processors which may be configured, e.g. in conjunction with an interface, to save and display the actual and historical states of the system. Such one or more further processors may also be configured to periodically or based on an order check the state of the system 250 or the state of one of its components. Additionally or alternatively the second processor 208 and/or 256 and/or their respective databases may be queried to output data in the data stream 260. Choosing which components to use for output results may depended on the kind of result data and the latency created.

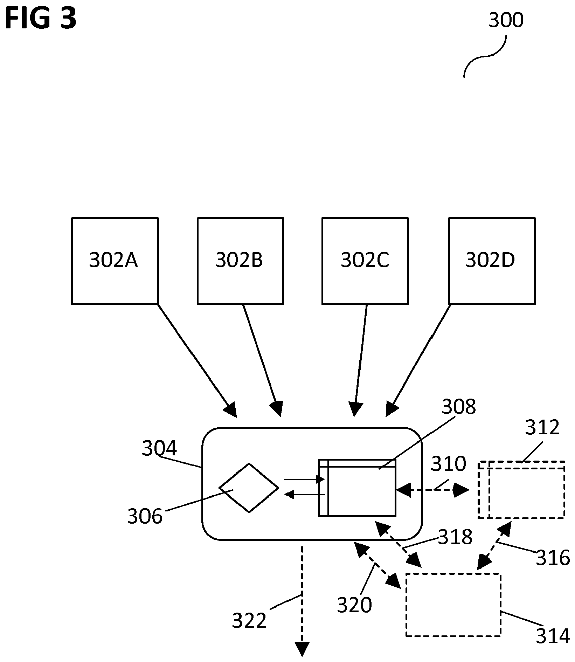

**FIG.3** schematically shows a system 300 for processing one or more data streams.

System 300 illustrates aspects which may be part or may be optionally implemented in system 200, system 250 and/or implemented by method 100.

Data streams may be received by a data stream processing system 304 by various data stream sources 302A, 302B, 302C, 302D. As described earlier, the data stream sources may be other processors, computing devices, sensors and the like. Data indicative of a time-based order may already be present in the data streams from the data stream sources 302A, 302B, 302C, 302D or the data stream processing system 304 maybe configured to add such data to the data streams. The data from the data stream sources 302A, 302B, 302C, 302D may clearly indicate transactions with a database 308 which is part of the data stream processing system 304. Furthermore, the data stream processing system 304, e.g. parts thereof such as the earlier described first, second and third processor may be configured to interpret/extract/convert the data to achieve data indicative of transactions (or a time-based order) understandable by other parts of the system.

The data stream processing system 304 may process a logic/payload by a component 306. In system 200 this logic was processed by the third processor 214. Data indicative of which logic to process and how the logic has to be processed may be stored and implemented in the data stream processing system 304 and/or the data in the data stream itself may include data indicative of the logic to be processed.

As shown in system 200 and system 250, the data stream processing system 304 may include at least one database 308. In some examples, the data stream processing system 304 or components, e.g. the database 308, may be configured to communicate 310 with a database 312 which is not part of the system 304. In the illustrative example described in the context of FIG.2A, the system 300 may be configured to check in an outside database 312 for the dollar exchange rate.

Another device, e.g. the processor 314, may be used to query the data stream processing system 304, the database 308 and/or the database 312. The processor 314 may be configured to query the state of the data stream processing system 304 and/or its individual components. The processor 314 may also be configured to process the result of the queries and/or may include or be communicating to an interface to display the results.

In other examples, another data stream processing system may be configured to interact with the data stream processing system 304. By way of example, if values in the individual databases have dependencies or the other system is dependent on the state of the data stream processing system 304. The other data stream processing system may also receive the same one or more data streams any may process the one or more data streams in the same way to create a redundancy.

As described in context of system 250 in FIG.2B, also the data stream processing system 304 may be configured to output 322 results and/or data according to the state of the data stream processing system 304.

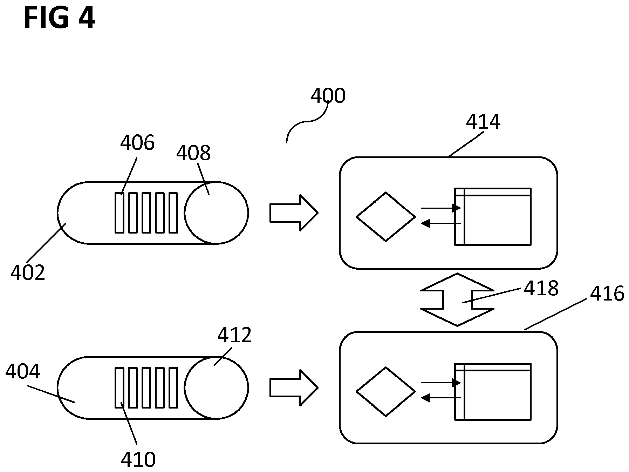

**FIG.4** schematically shows a system 400 for processing one or more data streams.

The system 400 illustrates a distributed system. A data stream includes a first data stream portion 402 including transactions 406 and data indicating transaction logic 408 and a second data stream portion 404 including transactions 410 and data indicating transaction logic 412. In this example, the transaction logic 408 applies to all transactions 406 and the transaction logic 412 applies to all transactions 410. In other words, data indicative of a transaction logic/payload is separate from data indicating individual transactions. In other examples, every transaction may carry their own data indicative of the transaction logic. Splitting the data stream into the two (in other examples more than two) data stream portions 402 and 404 may be implemented by data stream sources, another processor and/or a processor of the data stream processing systems 414 and 416.

The data stream processing systems 414 and 416 may comprise, as described earlier, databases and the stream portions 402 and 404 may be split according to the different databases, e.g. according to the values stored in the databases. In the above mentioned illustrative example of system 200, the data stream processing system 414 may comprise a database in which the account X is stored and the data stream processing systems 416 may include a database in which the account Y is stored. The two data stream processing systems 414 and 416 may be configured to exchange data for processing the transaction, e.g. the individual processors of the two data stream processing systems 414 and 416 may be configured to communicate to each other or a third processor as described earlier of data stream processing systems 414 and 416 maybe the same processor (418).

The system 400 or an according method for data stream processing may be configured to run in a distributed setup as shown. The data stream may be processed with multiple parallel machines and/or CPU cores. Also, a system may implement several processors and/or other components of the system more than one time to create a redundancy for system stability.

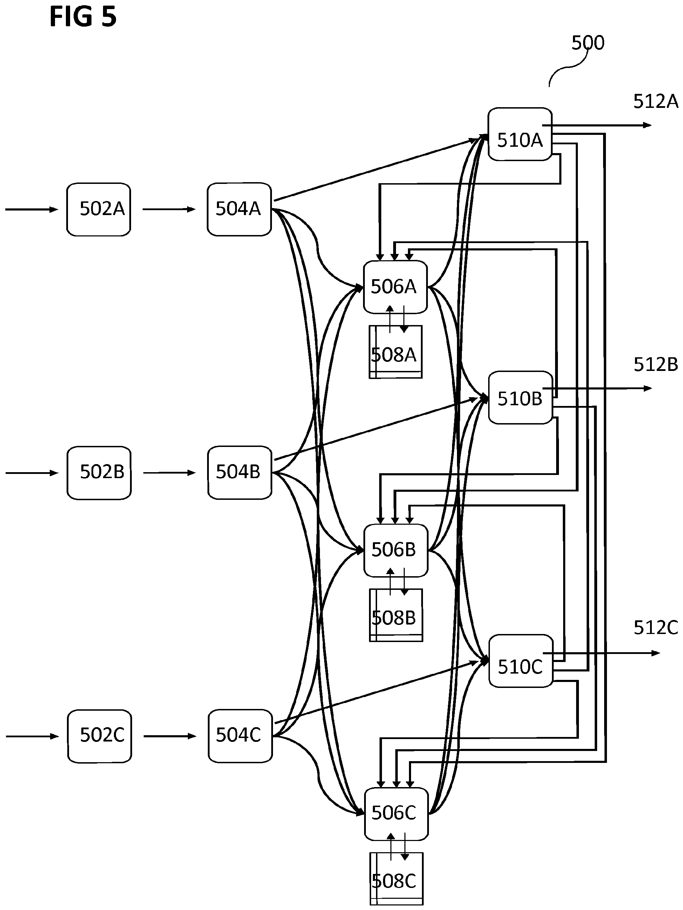

**FIG. 5** schematically shows a system 500 for processing one or more data streams.

The system 500 of FIG.5 may be understood as another implementation of a method, e.g. the method 100, or a system, e.g. the system 200, as described above and as described in the following.

Generally, as illustrated by the arrows in FIG.5 all processors are configured to communicate to each other according to the needs of the method and/or a system. By way of example, a third processor 510A, 510B, 510C may be configured to communicate to one or more or all of the second processors 506A, 506B and 506C if the third processor 510A, 510B, 510C needs to have access to the individual databases of the second processors 506A, 506B and 506C. In some examples, a system is configured in such a way, that processors of the same type, e.g. first, second and/or third processors, do not communicate with each other so that, for example, a third processor does only communicate with one or more first and/or second processors. Also, mixed versions are possible, e.g. only the first, the second and/or the third processors do not communicate with the same type of processors but the other processors do. The system can be freely adapted to the necessities of the application of a system.

FIG.5 shows an illustrative example of a distributed system. Three fourth processors 502A, 502B and 502C each respectively receive a data stream or each respectively receive a portion of one data stream (in other examples one or more fourth or other processors in one system may receive one or more data streams and one or more other fourth processors may receive a portion of a data stream).

As described earlier, the fourth processors 502A, 502B and 502C may be omitted and the one or more data streams/portion of data streams may be directly received by three first processors 504A, 504B and 504C. The three first processors 504A, 504B and 504C may send data to the three second processors 506A, 506B and 506C which may include or are communicatively coupled to databases 508A, 508B and 508C. Also, the first processors 504A, 504B and 504C may send data to the three third processors 510A, 510B and 510C. In this example the third processors 510A, 510B and 510C are each configured for outputting a results, e.g. to an interface and/or another processor such as a computing device.

That there are three fourth processors 502A, 502B and 502C, three first processors 504A, 504B and 504C, three second processors 506A, 506B and 506C, three databases 508A, 508B and 508C and three third processors 510A, 510B and 510C in a symmetrical fashion is only an illustrative example. In other examples, the number of each type of processor may be different. In other words, the number of each processor may be adapted to the needs of the particular system and method.

In a parallel/distributed setup as shown in FIG.5, the processors process in the form of multiple parallel instances. Similar as described above, a data stream may be split into data stream portions. This may be done by one or more other processors (not shown), the fourth processors 502A, 502B and 502C or the first processors 504A, 504B and 504C. Splitting the data stream may be done based on the values each database 508A, 508B and 508C holds, the latency of the communication lines or other parameters. By way of example, after a data stream portion is received by the first processor 504A, the first processor 504A send the information/data as described earlier to one or more of the second processors 506A, 506B and 506C according to the values of the transaction and the databases comprised or connected to the second processors 506A, 506B and 506C.

The three fourth processors 502A, 502B and 502C add data indicative of a total time-based order to the data in the data stream/portions of the data streams so that every transaction indicated by the data includes information of an individual time, e.g. a logical timestamp.

As described earlier, the three first processors 504A, 504B and 504C extract/copy information about data access (e.g. read, write, create and/or delete) from the respective data stream/portion of a data stream and respectively send it to the three second processors 506A, 506B and 506C each with their individual databases 508A, 508B and 508C. The first processors 504A, 504B and 504C may be configured to choose to which second processors 506A, 506B and 506C the information is send, e.g. based on the particular values of the transaction stored in the particular databases 508A, 508B and 508C. In other words, one first processor may be configured to communicate with more than one second processor.

Also, the first processors 504A, 504B and 504C may send information about transactions to the third processors 510A, 510B and 510C according to the respective data stream/portion of a data stream as described earlier. Further, a third processor may be receiving data from more than one first processors.

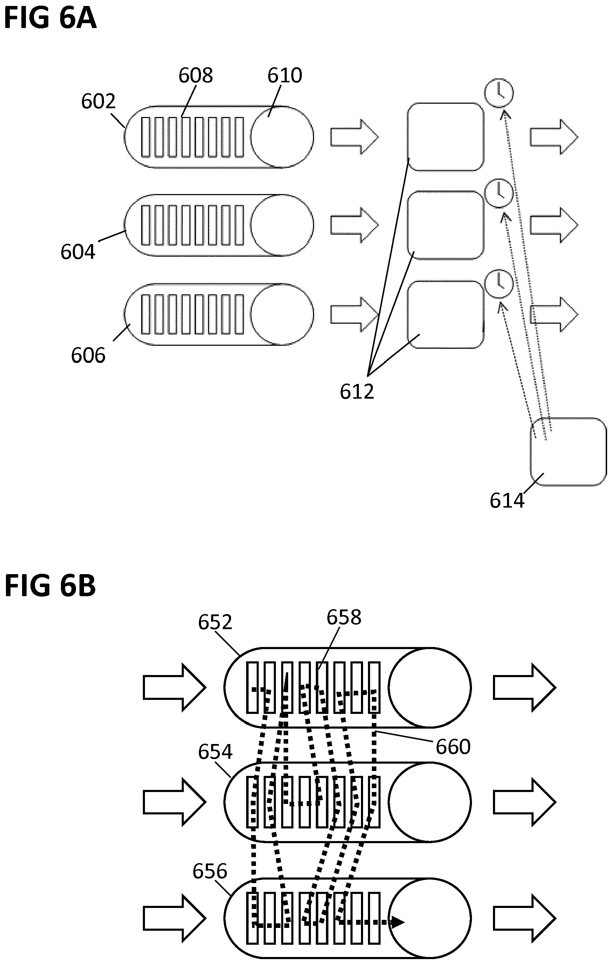

**FIG.6A** schematically shows a system for adding data indicative of a time-based order to a data stream.

The system shown in FIG.6A may be implemented in a system or correspondingly in a method as described in examples and embodiments above and in the following.

In this example, a data stream is split into three portions 602, 604 and 606. In other examples, this may not be or not all may be portions of a data stream but individual data streams. Each portion of the data stream, illustratively shown with the reference signs 608 and 610, may comprise data indicative of one or more transactions 608 and data indicative of a logic/payload of the transactions 610.

Each data stream portion 602, 604 and 606 may be respectively received by one fourth processor 612. In other examples, only one or another number of fourth processors 612 may be present. In other words, one fourth processor may add data indicative of a time-based order to more than one portion of a data stream 602, 604 and 606.

In this example, a fifth processor 614 is used as a time giver/"time beacon" for the fourth processors 612. The fifth processor 614 may be used to synchronize clocks or other (logical) values which may represent a time-based order. In another example, the fourth processors synchronize their clocks or other logic values representing a time-based order only with each other omitting a fifth processor 614. The fifth processor 614 may periodically send to all fourth processors 612 the target time that they should have or at least should come close to. If a time of a clock of a fourth processor 612 is lagging behind the clock of the fifth processor 614, the clock of the fourth processor is set to jump to that time. If the clock of a fourth processor 612 is ahead of the clock of the fifth processor 614, it pauses for as long as it is ahead. This way the clock of a fourth processor 612 proceeds monotonous and never jumps backwards.

One effect of this example and other examples implemented otherwise is to ensure that every transaction and therefore every data access event of a transaction includes information about a unique time or unique identifier for a sequence and that the sequence is monotonous. In this example, to ensure that every transaction in the multiple portions of the data stream 602, 604, 606 has a unique time-based identifier the fourth processors 602, 604 and 606 have to be coordinated (e.g. by the fifth processor 614 and/or by communicating to each other).

Data indicative of a time (e.g. in the unit of nanoseconds) and a sequence number may be added to the individual transaction data. The time is assigned by a local clock of the individual fourth processor 612, e.g. as synchronized by a fifth processor 614. The time and the sequence number together may be understood as a logical time or logical timestamp. All sorts of numbers, letters or other symbols and references may be used as long as they indicate an order of some sort and are unique for each transaction. The timestamp may also comprise an identifier to identify the individual fourth processor 612 and the system may implement an order of more than one fourth processor 612.

A sequence number in the timestamp maybe used to ensure that more than one fourth processors 612 do not add a timestamp with the same time to different transactions. The sequence number may increase for every transaction that would be assigned to the same time. To keep the logical time stamps unique, each fourth processor 612 may have a different offset value to the sequence number, e.g. the sequence number of the first of the fourth processors 612 may have an offset of 0, the second of the fourth processors 612 may have an offset of 1000 and so on. Such an offset may be used as an identifier of the different fourth processors 612 and may therefore enforce a unique logical timestamp for every transaction 608.

To sort the transactions based on the time-based order according to this logical timestamp, e.g. by a second processor as described earlier, primarily the data indicative of the time of the different transactions/data access events is compared. If the time is the same for more than one transaction, the sequence number or another value (e.g. an additional value) is compared.

**FIG.6B** schematically shows a data stream with data stream portions 652, 654 and 656 with added data indicative of a time-based order (second data).

The three data stream portions 652, 654 and 656 may correspond to the data streams/data stream portions according to the example of FIG.6A or according to any other example and embodiment described herein. As described above, each data stream portion 652, 654 and 656 may include one or more transactions/data indicative of a transaction. For the sake of overview only one transaction 658 has a reference sign. The curved-arrow 660 illustratively shows the sequence/the order of the individual transaction as they are processed by a system or a method as described above.

As described earlier, each of the transactions 658 may have a unique identifier, e.g. a timestamp/logical timestamp, included that is used as indicator for a total order of the transactions 658. Thus, any processor, e.g. a first and or a second processor in the above described examples, is configured to sort the transactions and according data access events and to process them in the time-based order. Furthermore, it is ensured that the time-based order is monotonous in the sense that if a time/logical time is reached no lower time/logical time can occur.

If one or more data streams and/or portions of a data stream does not carry data indicative of a transaction for a time period, the processor that adds data indicative of a time-based order to the data stream/portion of the data stream may be configured to add data to the data stream indicative of the time the processor would assign to a transaction at this moment. This can also be done by a data source for a data stream. This is so-called punctuation event may be implemented periodically and/or dependent or independent of the amount of data/number of transactions in a data stream.

Such a punctuation event may be used for one or more of the downstream processors (e.g. first, second, third and/or other processors in the previous examples) that they know that time has increased to this particular value.

Especially in a distributed setup with more than one fourth processors the transactions and data access events may not arrive in order at a second processor as described above. Such a second processor may use punctuation events as a measure such that all transaction within the time period between two punctuation events are sorted based on the time-based order.

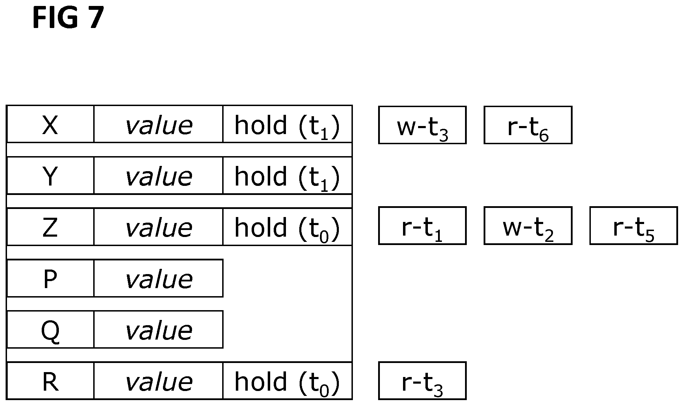

**FIG.7** schematically illustrates prohibiting data access.

After a second processor, as described earlier, may have sorted the transactions and/or the data access events of one or more data streams/data stream portions, the second processor may prohibit data access such as write, read, create and/or delete of one or more values in a database. This prohibition, e.g. marking a value with an "hold", is done to enforce that every transaction is processed in a strict order, e.g. the time-based order of the transactions as described earlier. Marking single values according to a transaction/data access event and not the whole database with a "hold" has the effect that transactions that do not access the same data and do not interfere with each other can be processed in parallel.

In an example, which may be implemented in one of the above described examples and embodiments for a system and/or a method, for each write event of a transaction/data access event, if the value is not marked currently with a "hold", the value is marked with a "hold", e.g. by the second processor and/or by the corresponding database. For each read event, if the value is not marked with a "hold" currently, the processor/database reads the value. If the value for the read event is marked with a "hold", the processor/database queues that read event.

FIG.7 illustratively shows values X, Y, Z, P, Q and R which may be stored in one or more databases. In some examples the values may be key values of a respective database or table within a database. Such a value may also be a combination, e.g. the value X may be a combination of a value stored in one database/table of a database and another value stored in another database/table. As can be seen in FIG.7 the value X is marked with a "hold" according to a transaction/data access event t₁ (the time-based order of the transactions/data access events is illustrated in this example by the index m of tₘ). For the value X a write event w-t₃ according to transaction t₃ and a read event r-t6 according to transaction t₆ are queued and will be processed when the "hold" is lifted. The other values Y, Z, P, Q, R are accordingly processed.

Example 1 is a data stream processing method. The method may include receiving by at least one first processora data stream comprising first data that includes transactions to be executed on a database, receiving by at least one second processor from the at least one first processor information regarding data access to the database and second data indicative of a time-based order of the transactions, the information extracted from the first data and the second data, receiving by at least one third processor from the at least one first processor the first data, and processing the transactions by the at least one third processor. The at least one second processor provides data access to the database to the at least one third processor based on the time-based order determined from the second data.

In Example 2, the subject matter of Example 1 can optionally include that the at least one first processor adds the second data to the data stream or wherein receiving the data stream by the at least one first processor includes receiving the data stream from at least one fourth processor. The at least one fourth processor adds the second data to the data stream.

In Example 3, the subject matter of any one of Examples 1 or 2 can optionally include that the at least one third processor processes a transaction when data access to the database required for the transaction is provided by the second processor. After processing the transaction by the at least one third processor, the database is updated based on the processing by the second processor.

In Example 4, the subject matter of any one of Examples 1 to 3 can optionally include that the at least one second processor temporarily prohibits read access and/or write access to the database for at least one value with respect to the first data and the second data.

In Example 5, the subject matter of any one of Examples 1 to 4 can optionally include that the at least one second processor includes at least two second processors. Each second processor receives a portion of the data stream. Each second processor provides data access according to the respective portion of the data stream to the at least one third processor for processing.

In Example 6, the subject matter of any one of Examples 1 to 5 can optionally include that the at least one first processor includes at least two first processors. Each first processor receives a portion of the data stream. Each first processor sends information regarding data access to the database to the at least one second processor according to the respective portion of the data stream. The at least one second processor sorts the incoming information based on the second data.

In Example 7, the subject matter of any one of Examples 1 to 6 can optionally include that the first data includes information for processing the data by the at least one third processor.

Example 8 is a system for processing a data stream. The system may include at least one first processor configured to receive a data stream comprising first data that includes transactions to be executed on a database, at least one second processor configured to receive information regarding data access to the database from the at least one first processor and second data indicative of a time-based order of the transactions. The information is extracted from the first data and the second data. The system may further include at least one third processor configured to receive the first data from the at least one first processor. The at least one third processor is configured to process the transactions. The at least one second processor is configured to provide data access to the data base to the at least one third processor based on the time-based order determined from the second data.

In Example 9, the subject matter of Example 8 can optionally include that the at least one first processor is configured to add the second data to the data stream or the system further includes at least one fourth processor. The at least one first processor is configured to receive the data stream from the at least one fourth processor. The at least one fourth processor is configured to add the second data to the data stream. Optionally, the at least one fourth processor is configured to receive information regarding time from a fifth processor.

In Example 10, the subject matter of any one of Examples 8 or 9 can optionally include that the at least one third processor is configured to process a transaction when data access to the database required for the transaction is provided by the second processor. The at least one third processor is further configured to, after processing the transaction by the at least one third processor, update the database based on the processing by the second processor.

In Example 11, the subject matter of any one of Examples 8 to 10 can optionally include that the at least one second processor is configured to temporarily prohibit read access and/or write access to the database for at least one value with respect to the first data and the second data.

In Example 12, the subject matter of any one of Examples 8 to 11 can optionally include that the at least one second processor includes at least two second processors. Each second processor is configured to receive a portion of the data stream. Each second processor is configured to provide data access according to the respective portion of the data stream to the at least one third processor for processing.

In Example 13, the subject matter of any one of Examples 8 to 12 can optionally include that the at least one first processor includes at least two first processors. Each first processor is configured to receive a portion of the data stream. Each first processor is configured to send information regarding data access to the database to the at least one second processor according to the respective portion of the data stream. The at least one second processor is configured to sort the incoming information based on the second data.

In Example 14, the subject matter of any one of Examples 8 to 13 can optionally include that the first data includes information for processing the data by the at least one processor.

In Example 15, one or more non-transitory computer readable media storing instructions thereon, that, when executed by one or more processors, direct the one or more processors to perform a method or realize a system as described herein.

While the above descriptions and connected figures may depict device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods/algorithms detailed herein are exemplary in nature, and are thus understood as capable of being implemented in a corresponding device. Likewise, it is appreciated that implementations of devices detailed herein are understood as capable of being implemented as a corresponding method and/or algorithm. It is thus understood that a device corresponding to a method detailed herein may include one or more components configured to perform each aspect of the related method.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A data stream processing method, comprising:
receiving by at least one first processor a data stream comprising first data that includes transactions to be executed on a database;
receiving by at least one second processor from the at least one first processor information regarding data access to the database and second data indicative of a time-based order of the transactions, the information extracted from the first data and the second data;
receiving by at least one third processor from the at least one first processor the first data; and
processing the transactions by the at least one third processor, wherein the at least one second processor provides data access to the database to the at least one third processor based on the time-based order determined from the second data.

2. The method of claim 1,
wherein the at least one first processor adds the second data to the data stream.

3. The method of any one of claims 1 or 2,
wherein receiving the data stream by the at least one first processor comprises receiving the data stream from at least one fourth processor; and
wherein the at least one fourth processor adds the second data to the data stream.

4. The method of any one of claims 1 to 3,
wherein the at least one third processor processes a transaction when data access to the database required for the transaction is provided by the second processor; and
wherein after processing the transaction by the at least one third processor, the database is updated based on the processing by a second processor.

5. The method of any one of claims 1 to 4,
wherein the at least one second processor temporarily prohibits at least one of read access or write access to the database for at least one value with respect to the first data and the second data.

6. The method of any one of claims 1 to 5,
wherein the at least one second processor comprises at least two second processors;
wherein each second processor receives a portion of the data stream;
wherein each second processor provides data access according to the respective portion of the data stream to the at least one third processor for processing.

7. The method of any one of claims 1 to 6,
wherein the at least one first processor comprises at least two first processors;
wherein each first processor receives a portion of the data stream;
wherein each first processor sends information regarding data access to the database to the at least one second processor according to the respective portion of the data stream; and
wherein the at least one second processor sorts the incoming information based on the second data.

8. A system for processing a data stream, the system comprising:
at least one first processor configured to receive a data stream comprising first data that includes transactions to be executed on a database;
at least one second processor configured to receive information regarding data access to the database from the at least one first processor and second data indicative of a time-based order of the transactions, wherein the information is extracted from the first data and the second data; and
at least one third processor configured to receive the first data from the at least one first processor;
wherein the at least one third processor is configured to process the transactions, wherein the at least one second processor is configured to provide data access to the database to the at least one third processor based on the time-based order determined from the second data.

9. The system of claim 8,
wherein the at least one first processor is configured to add the second data to the data stream.

10. The system of any one of claims 8 or 9, wherein the system further comprises at least one fourth processor;
wherein the at least one first processor is configured to receive the data stream from the at least one fourth processor;
wherein the at least one fourth processor is configured to add the second data to the data stream;
wherein preferably the at least one fourth processor is configured to receive information regarding time from a fifth processor.

11. The system of any one of claims 9 to 10,
wherein the at least one third processor is configured to process a transaction when data access to the database required for the transaction is provided by the second processor; and
wherein the at least one third processor is further configured to, after processing the transaction by the at least one third processor, update the database based on the processing by a second processor.

12. The system of any one of claims 9 to 11,
wherein the at least one second processor is configured to temporarily prohibit at least one of read access or write access to the database for at least one value with respect to the first data and the second data.

13. The system of any one of claims 9 to 12,
wherein the at least one second processor comprises at least two second processors;
wherein each second processor is configured to receive a portion of the data stream;
wherein each second processor is configured to provide data access according to the respective portion of the data stream to the at least one third processor for processing.

14. The system of any one of claims 9 to 13,
wherein the at least one first processor comprises at least two first processors;
wherein each first processor is configured to receive a portion of the data stream;
wherein each first processor is configured to send information regarding data access to the database to the at least one second processor according to the respective portion of the data stream; and
wherein the at least one second processor is configured to sort the incoming information based on the second data.

15. One or more non-transitory computer readable media storing instructions thereon, that, when executed by one or more processors, direct the one or more processors to perform a method, the method comprising:
receiving by at least one first processor a data stream comprising first data that includes transactions to be executed on a database;
receiving by at least one second processor from the at least one first processor information regarding data access to the database and second data indicative of a time-based order of the transactions, the information extracted from the first data and the second data;
receiving by at least one third processor from the at least one first processor the first data; and
processing the transactions by the at least one third processor, wherein the at least one second processor provides data access to the database to the at least one third processor based on the time-based order determined from the second data.
